# EUROPÄISCHE PATENTSCHRIFT

(11) **EP 1 702 835 B1**
(45) Veröffentlichungstag und Bekanntmachung des Hinweises auf die Patenterteilung: **03.12.2008**
(21) Anmeldenummer: 05005520.1
(22) Anmeldetag: 14.03.2005
(51) Int. Cl.: B62D 59/04, B60S 9/215

(54) **Antriebsrolle für Hilfsantrieb eines Anhängers**
Drive roller for the auxiliary drive of a trailer
Rouleau d'entraînement de l'entraînement auxiliaire pour remorque

(43) Veröffentlichungstag der Anmeldung: 20.09.2006
(73) Patentinhaber: Truma Gerätetechnik GmbH & Co. KG, 85640 Putzbrunn (DE)
(72) Erfinder: Wickelmaier, Peter, 81671 München (DE); Brunnhuber, Hans-Georg, 83627 Wangau (DE)
(74) Vertreter: Müller - Hoffmann & Partner

(56) Entgegenhaltungen:
- EP-A- 1 394 023
- EP-A- 1 394 024
- DE-A1- 2 711 214
- US-A- 3 596 728
- US-A- 4 596 300

## Beschreibung

Die Erfindung betrifft gemäß dem Oberbegriff von Patentanspruch 1 eine Antriebsrolle für einen Hilfsantriebs eines Fahrzeuganhängers.

Eine solche Antriebsrolle ist aus der EP 1 394 023 bekannt.

Anhänger werden üblicherweise von Zugmaschinen gezogen. So ist es bekannt, dass ein PKW einen Wohnwagen ziehen kann. Wenn der Anhänger von der Zugmaschine abgenommen ist, wird er üblicherweise von Hand in die endgültige Position geschoben. Jedoch werden heutzutage zunehmend Anhänger im Wohnwagenbereich angeboten, die aufgrund ihrer Größe und damit ihres Gewichts nur noch unter Mühen von Hand verschoben werden können. Daher wurden Hilfsantriebe entwickelt, die es ermöglichen, auch ohne Zugmaschine einen Anhänger mit Motorunterstützung zu verschieben bzw. zu drehen.

Aus der EP 0 827 898 A1 ist ein Hilfsantrieb für einen Anhänger bekannt, bei dem ein Rahmenteil fest mit dem Fahrgestell des Anhängers verbunden ist. Der Rahmenteil trägt einen relativ zu dem Rahmenteil bewegbaren Träger, von dem wiederum ein Antriebsmotor mit einer von dem Antriebsmotor antreibbaren Antriebsrolle gehalten wird. Weiterhin ist ein Bewegungsmechanismus vorgesehen, zum Bewegen des Trägers zwischen einer Ruheposition, in der die Antriebsrolle von einem Reifen des Anhängers getrennt ist, und einer Antriebsposition, in der die Antriebsrolle gegen den Reifen des Trägers gedrückt wird. Die Änderung der Position des Trägers erfolgt manuell mit Hilfe eines Hebels, der an dem Träger angesetzt werden kann.

In der EP 1 203 713 A1 wird ein anderer Hilfsantrieb für einen Anhänger beschrieben, der jedoch nach dem gleichen Prinzip arbeitet. Während allerdings die Antriebsrolle bei dem Hilfsantrieb gemäß EP 0 827 898 A1 um eine horizontale, zur Radachse parallele Achse verschwenkt wird, ist bei dem Hilfsantrieb gemäß EP 1 203 713 A1 eine vertikale Schwenkachse vorgesehen.

Bei den bekannten Hilfsantrieben besteht die Antriebsrolle aus einem zylindrischen Grundkörper aus Stahl oder Aluminium und einer auf dessen Mantelfläche aufgebrachten Haftbeschichtung. Die Haftbeschichtung wiederum besteht aus einem körnigen, scharfkantigen Material, das mit Hilfe eines Klebstoffs auf der Mantelfläche fixiert ist. Dadurch entsteht auf der Mantelfläche eine Oberfläche, die mit der Oberfläche von grobem Schmirgelpapier vergleichbar ist.

Bei einer derart gestalteten Antriebsrolle hat es sich herausgestellt, dass bei Nässe auf Grund des dann herabgesetzten Reibwertes nur noch geringe Drehmomente der Antriebsrolle auf den anzutreibenden Reifen des Anhängers übertragen werden können. Bei längerem Einsatz bewirkt die schmirgelpapierähnliche Oberfläche einen erhöhten Abrieb des Reifens. Bei einem Durchdrehen der Antriebsrolle - z. B. bei zu geringer Andrückkraft - kann die Lauffläche des Reifens durch die Schmirgelwirkung zerstört werden. Umgekehrt kann bei einer starken punktuellen Beanspruchung der Antriebsrolle - z. B. bei einem zwischen der Antriebsrolle und dem Reifen eingeklemmten Stein oder Nagel - die Haftbeschichtung abplatzen. Zudem ist das Herstellungsverfahren aufwändig und damit teuer.

In der EP-A-1 394 023 wird ein Selbstfahrantrieb für einen Anhänger beschrieben, bei dem eine von einer Antriebseinheit angetriebene Antriebswalze mehrere konzentrische Ringe aufweist, an denen zur Darstellung einer Reiboberfläche Zähne bzw. eine Verzahnung vorgesehen sind.

Aus US-A-3,596,728 ist ein Notantrieb für Fahrzeuge bekannt, bei dem die Antriebskraft eines angetriebenen Reifens über ein oder mehrere Zwischenräder auf einen weiteren, normalerweise nicht angetriebenen Fahrzeugreifen übertragen werden kann. Die Zwischenräder können eine sich entlang ihrer Längsachse erstreckende Profilierung aufweisen.

Der Erfindung liegt die Aufgabe zu Grunde, eine Antriebsrolle anzugeben, die sich einerseits wirtschaftlich herstellen lässt und bei der andererseits die oben beschriebenen Nachteile des Standes der Technik vermieden werden können.

Die Aufgabe wird erfindungsgemäß durch eine Antriebsrolle gemäß Patentanspruch 1 gelöst. Vorteilhafte Weiterentwicklungen der Erfindung sind in den abhängigen Ansprüchen angegeben.

Demnach wird erfindungsgemäß eine Antriebsrolle für einen Hilfsantrieb eines Anhängers angegeben, mit einem bezüglich einer als Drehachse dienenden Längsachse im Wesentlichen rotationssymmetrischen Grundkörper. Der Grundkörper weist erfindungsgemäß eine Mantelfläche auf, die von der Mantelfläche eines idealen Zylinders abweicht.

Dementsprechend wird die Mantelfläche des Grundkörpers mit einer Grobstruktur durch eine geeignete Form- bzw. Profilgebung versehen, mit der ein Formschluss zwischen der Antriebsrolle und dem anzutreibenden Reifen erreicht werden kann. Der Grundkörper kann zwar im Prinzip immer noch einem Zylinder ähnlich sehen. Er weist jedoch die von dem Zylinder abweichende Mantelfläche auf, so dass zwangsläufig Bereiche in der Mantelfläche entstehen, die gegenüber anderen Bereichen radial vorstehen. Diese vorstehenden, d. h. von der Längs- bzw. Drehachse der Antriebsrolle größer beabstandeten Bereiche dringen zwangsläufig tiefer in den Reifen ein, wodurch der gewünschte Formschluss erreicht wird. Die anderen Bereiche, die gegenüber den vorstehenden Bereichen radial zurücktreten, d. h., einen geringeren Abstand zur Drehachse der Antriebsrolle aufweisen, dienen der Entlastung, so dass die durchschnittliche Gesamtandrückkraft gegen den Reifen einer Andrückkraft entspricht, die dann erforderlich wäre, wenn der Grundkörper - wie beim Stand der Technik - einem idealen Zylinder entsprechen würde.

Die vorstehenden Bereiche der Mantelfläche bewirken lokal eine erhöhte Flächenpressung an der Lauffläche des Reifens, wodurch außer dem gewünschten Formschluss auch eine größere Reibwirkung erreicht wird.

Die Mantelfläche weist ein von einem idealen Kreis abweichendes, senkrecht zu der Längsachse stehendes Querschnittsprofil auf. Unter dem Querschnittsprofil ist somit die Außenkontur eines bezüglich der Längsachse gebildeten Querschnitts anzusehen. Da die Mantelfläche des Grundkörpers von der eines idealen Zylinders abweichen soll, darf folglich auch das Querschnittsprofil nicht dem eines idealen Kreises entsprechen.

Wie oben bereits dargelegt, ist es von besonderem Vorteil, wenn das Querschnittsprofil Bereiche aufweist, die von der Längsachse unterschiedlich beabstandet sind. Die Bereiche, die einen größeren Abstand von der Längsachse aufweisen, dringen tiefer in den elastischen Reifen ein, während die näher zu der Längsachse stehenden Bereiche eine Entlastung bewirken.

Bei der Erfindung verläuft das Querschnittsprofil entlang dem Umfang der Mantelfläche sinusförmig. Dies erlaubt einen weichen, harmonischen Übergang zwischen den von der Längsachse unterschiedlich beabstandeten Bereichen. Dadurch kann die Laufruhe verbessert und der Verschleiß gemindert werden.

Das Querschnittsprofil entlang der Längsachse ist unveränderlich. Das Querschnittsprofil kann z. B. durch ein Strangpressverfahren sehr einfach und wirtschaftlich hergestellt werden. Das Querschnittsprofil ändert sich dementsprechend im Verlauf der Längsachse nicht.

Bei einer anderen Ausführungsform der Erfindung ist das Querschnittsprofil entlang der Längsachse veränderlich. Entlang der Längsachse weisen dann gleiche Bereiche des Querschnittsprofils unterschiedliche Abstände von der Längsachse auf. Das bedeutet, dass Bereiche des Querschnittsprofils, die an einer Stelle der Längsachse einen größeren Abstand von der Längsachse aufweisen, an einer anderen Stelle der Längsachse, also bei einem an einer anderen Stelle der Längsachse gebildeten Querschnitt, einen geringeren Abstand aufweisen. Ebenfalls kann bei einem derartigen Querschnittsprofil eine noppenähnliche Grobstruktur auf der Mantelfläche des Grundkörpers ausgebildet werden.

Bei einer besonders vorteilhaften Weiterentwicklung der Erfindung weist eine durch die Mantelfläche gebildete Oberfläche eine erhöhte Rauhigkeit auf. Während beim Stand der Technik auf den metallischen Träger eine zusätzliche Haftbeschichtung aufgebracht werden musste, ist es erfindungsgemäß die metallische Oberfläche des metallischen Grundkörpers selbst, die die erhöhte Rauhigkeit aufweist. Dadurch kann auf die zusätzliche Haftbeschichtung verzichtet werden.

Durch die erhöhte Rauhigkeit erhält die erfindungsgemäße Antriebsrolle zusätzlich zu der oben erwähnten, durch Profilgebung erreichten Grobstruktur eine Feinstruktur, die eine effiziente Kraftübertragung auf den Reifen gewährleistet.

Bei einer besonders vorteilhaften Ausführungsform der Erfindung ist die Oberfläche sandgestrahlt. Das Sandstrahlen bzw. ein verwandtes Verfahren bewirkt ein Aufrauhen der metallischen Oberfläche des Grundkörpers, so dass die gewünschte erhöhte Rauhigkeit erzeugt werden kann.

Ergänzend oder auch alternativ dazu kann die aufgerauhte Oberfläche auch durch ein urformgebendes Verfahren bei der Fertigung des Grundkörpers erzeugt werden. Zum Beispiel kann der gesamte Grundkörper als Aluminium-Druckgussteil hergestellt werden, wobei die Oberfläche mit Hilfe einer werkzeuggebundenen Strukturierung die gewünschte Rauhigkeit erhält.

Optional kann die Oberfläche durch eine Nachbehandlung gehärtet und/oder gegen Korrosion geschützt werden. Zum Beispiel eignet sich dazu das Harteloxieren, wenn die Antriebsrolle aus Aluminium hergestellt wird.

Die erfindungsgemäße Antriebsrolle kommt vorzugsweise in einem Hilfsantrieb für einen Anhänger zum Einsatz. Der Hilfsantrieb weist einen relativ zu einem Fahrgestell des Anhängers bewegbaren Träger und einen von dem Träger gehaltenen Antriebsmotor auf. Die Antriebsrolle ist an dem Träger gelagert und von dem Antriebsmotor antreibbar. Weiterhin ist ein Bewegungsmechanismus vorgesehen, zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird. Der Bewegungsmechanismus sollte dementsprechend auch eine Justiereinrichtung aufweisen, so dass die jeweiligen Positionen dauerhaft und zuverlässig gehalten werden können. Insbesondere sollte der Bewegungsmechanismus in der Lage sein, eine ausreichend große Andrückkraft zu erzeugen, mit der die Andrückrolle gegen das Rad des Anhängers angedrückt wird.

Ein derartiger Hilfsantrieb ist z. B. aus den oben bereits genannten Veröffentlichungen EP 0 827 898 A1 und EP 1 203 713 B1 bekannt. Erfindungsgemäß wird jedoch bei diesem Hilfsantrieb die erfindungsgemäß ausgestaltete Antriebsrolle verwendet, wodurch die oben genannten Vorteile erzielt werden können.

Diese und weitere Vorteile und Merkmale der Erfindung werden nachfolgend anhand von Beispielen unter Zuhilfenahme der begleitenden Figuren näher erläutert. Es zeigen:
- **Fig. 1**: eine erste Ausführungsform einer erfindungsgemäßen Antriebsrolle.
- **Fig. 2**: eine zweite Ausführungsform der Erfindung.

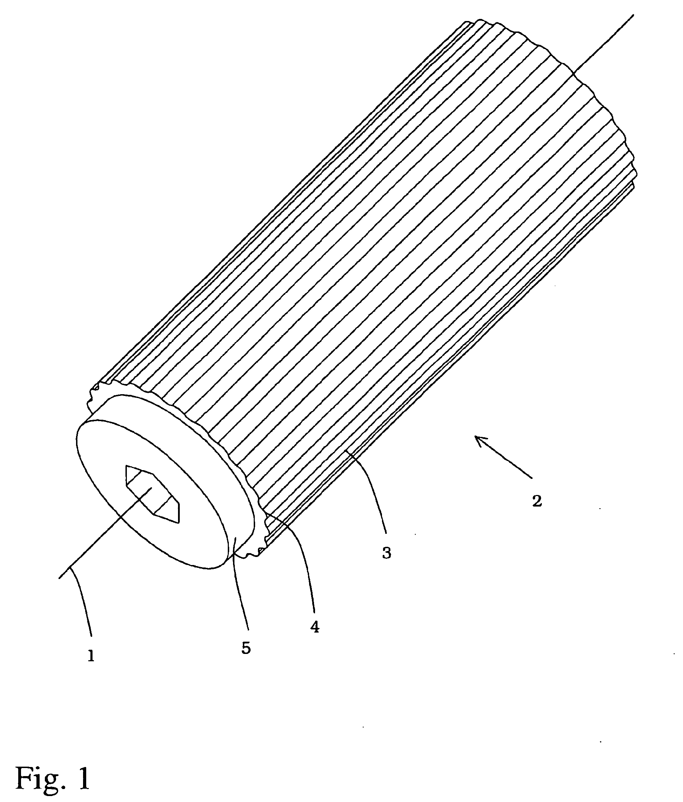

Fig. 1 zeigt in Perspektivdarstellung eine erste Ausführungsform der erfindungsgemäßen Antriebsrolle.

Die Antriebsrolle weist einen bezüglich einer als Drehachse dienenden Längsachse 1 im Wesentlichen rotationssymmetrischen bzw. zylindrischen Grundkörper 2 auf. Die Mantelfläche 3 des Grundkörpers 2 ist mit einem Querschnittsprofil 4 versehen, das entlang dem Umfang der Mantelfläche 3 sinusförmig verläuft. Die sich von dem Querschnittsprofil 4 entlang der Längsachse 1 in Fig. 1 erstreckenden Linien dienen nur der Verdeutlichung der Sinusstruktur des Querschnittsprofils 4.

Das Querschnittsprofil 4 ist entlang der Längsachse 1 unveränderlich. Dementsprechend kann das Querschnittsprofil 4 zusammen mit dem Grundkörper 2 besonders vorteilhaft in einem Strangpressverfahren hergestellt werden. In einem nachgeschalteten Verarbeitungsverfahren kann dann z. B. noch eine Nabe 5 gefertigt werden, um die Antriebsrolle in einer Halterung oder Lagerung zu befestigen.

Bei der in Fig. 1 gezeigten Ausführungsform ist die Antriebsrolle einstückig durch den Grundkörper 2 und die konturierte Mantelfläche 3 gebildet. Bei einer nicht dargestellten Variante ist es möglich, dass der Grundkörper 2 und die Mantelfläche 3 hohlzylindrisch ausgebildet sind, wobei der Hohlzylinder durch einen zusätzlichen Träger gehalten ist. Der Grundkörper 2 kann dann aus Aluminium hergestellt sein, während der Träger aus Stahl besteht.

Selbstverständlich kann auch der in Fig. 1 gezeigte Grundkörper 2 vollständig aus Aluminium oder auch vollständig aus Stahl bestehen.

Die Mantelfläche 3 mit dem Querschnittsprofil 4 bildet eine Grobstruktur der Antriebsrolle zur Verbesserung des Formschlusses aufgrund der besonderen Form- bzw. Profilgebung.

Weiterhin ist eine Feinstruktur der Mantelfläche 3 vorgesehen, die jedoch in der Fig. 1 naturgemäß nicht erkennbar ist. Die Feinstruktur wird durch eine erhöhte Rauhigkeit der durch die Mantelfläche 3 gebildeten Oberfläche des Grundkörpers 2 erreicht. Die erhöhte Rauhigkeit bewirkt eine Verbesserung des Reibungskoeffizienten, so dass das Antriebsdrehmoment von der Antriebsrolle zuverlässig auf den anzutreiben Reifen übertragen werden kann.

Die erhöhte Rauhigkeit kann z. B. durch Sandstrahlen der Oberfläche erreicht werden. Ergänzend oder alternativ dazu ist es auch möglich, die Oberfläche bereits bei der Herstellung der Mantelfläche durch ein formgebendes, z. B. ein urformendes Verfahren aufzurauhen. Zum Beispiel kann bei Herstellung der Antriebsrolle durch ein Gießverfahren (Aluminium-Druckguss) das Formwerkzeug bereits eine Feinstruktur aufweisen, die dann bei der Abformung in der Oberfläche der Antriebsrolle die gewünschte Rauhigkeit erreicht.

Durch die Kombination von Form bzw. Profil (Grobstruktur) und Oberfläche (Feinstruktur) kann eine Rolle geschaffen werden, die sowohl bei trockenem als auch bei feuchtem Reifen höchste Kraftübertragungen zulässt, ohne jedoch den Reifen beim Durchdrehen im Überlastfall zu schädigen. Die durch das sinusförmige Querschnittsprofil 4 erreichten weichen Übergänge zwischen den vorstehenden Bereichen (erhöhte Sinuslagen mit größerem radialen Abstand zur Längsachse 1) und den zurückstehenden Bereichen (tiefe Sinuslagen mit geringerem radialen Abstand zur Längsachse 1) schützen den anzutreibenden Reifen vor Beschädigungen.

Anstelle des sinusförmigen Querschnittsprofils 4 sind auch andere Querschnittsprofile denkbar, die Bereiche mit unterschiedlichen radialen Abständen zu der Längsachse 1 des Grundkörpers 2 aufweisen, so dass die Mantelfläche 3 von der Mantelfläche eines idealen Zylinders abweicht.

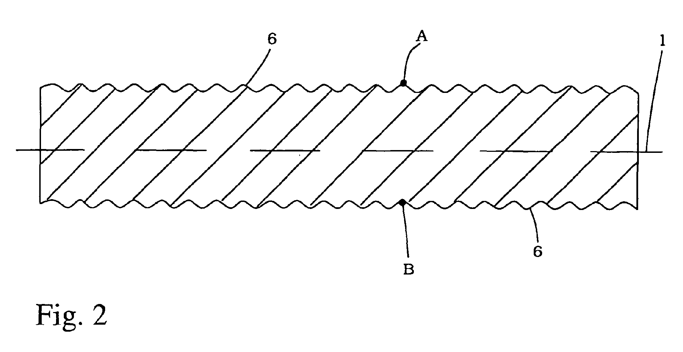

Fig. 2 zeigt eine zweite Ausführungsform der erfindungsgemäßen Antriebsrolle in Schnittdarstellung.

Während - wie oben dargelegt - bei der Antriebsrolle gemäß Fig. 1 das Querschnittsprofil 4 entlang der Längsachse 1 unveränderlich ist, wird in Fig. 2 eine Antriebsrolle mit einem Querschnittsprofil 6 gezeigt, welches sich im Verlauf der Längsachse 1 ändert. Insbesondere weisen gleiche Bereiche des Querschnittsprofils 6 im Verlauf entlang der Längsachse 1 unterschiedliche Abstände von der Längsachse auf, wie in Fig. 2 gut erkennbar, so dass ein veränderliches Längsschnittprofil gebildet wird.

Vorzugsweise ist dem Querschnittsprofil 6 die Struktur des Querschnittsprofils 4 aus Fig. 1 überlagert, so dass eine noppenähnliche Struktur erreicht wird. In Fig. 2 wird dies dadurch erkennbar, dass der in der unteren Bildhälfte gezeigte Längsverlauf des Querschnittsprofils 6 exakt dem in der oberen Bildhälfte gezeigten Verlauf entspricht. So ist ein Punkt A auf - bezogen auf die Längsachse 1 - gleicher Höhe wie ein Punkt B, wobei jedoch der Punkt A einen größeren radialen Abstand zur Längsachse 1 aufweist als der Punkt B.

Das Querschnittsprofil 6 ist in Fig. 2 sinusförmig dargestellt. Jedoch können auch andere Verläufe, z. B. Stufen oder schräg verlaufende Längsschnittprofile, entlang der Längsachse gewählt werden. Hierbei sind auch Fertigungserfordernisse zu berücksichtigen.

Die erfindungsgemäße Antriebsrolle gewährleistet bei trockenem wie bei nassem Reifen eine verbesserte Kraftübertragung auf Grund der durch Formgebung der Mantelfläche erreichten Grobstruktur zur Verbesserung eines Formschlusses. Zusätzlich kann eine Feinstruktur durch Aufrauhen der Mantelfläche erreicht werden, um den Reibungskoeffizienten zu verbessern. Bei der Antriebsrolle ist das Risiko einer Schädigung des Fahrzeugreifens beim Durchdrehen im Überlastfall reduziert. Zudem tritt auch im Langzeiteinsatz ein geringerer Abrieb im Reifen auf.

## Patentansprüche

1. Antriebsrolle für einen Hilfsantrieb eines Fahrzeuganhängers, mit einem bezüglich einer als Drehachse dienenden Längsachse (1) im Wesentlichen rotationssymmetrischen Grundkörper (2), wobei
- der Grundkörper (2) eine Mantelfläche (3) aufweist, die von der Mantelfläche eines idealen Zylinders abweicht;
- die Mantelfläche (3) ein von einem idealen Kreis abweichendes, senkrecht zu der Längsachse (1) stehendes Querschnittsprofil (4) aufweist; **dadurch gekennzeichnet, dass**
- das Querschnittsprofil (4) entlang dem Umfang der Mantelfläche (3) sinusförmig verläuft, wobei
- das Querschntttsprofil (4) entlang der Längsachse (1) unveränderlich ist.

2. Antriebsrolle nach Anspruch 1, **dadurch gekennzeichnet, dass** das Querschnittsprofil (4) Bereiche aufweist, die von der Längsachse (1) unterschiedlich beabstandet sind.

3. Antriebsrolle nach einem der Ansprüche 1 oder 2, **dadurch gekennzeichnet, dass** das Querschnittsprofil (4) durch ein Strangpressverfahren hergestellt ist.

4. Antriebsrolle nach einem der Ansprüche 1 bis 3, **dadurch gekennzeichnet, dass** das Querschnittsprofil (4) entlang der Längsachse (1) veränderlich ist, derart, dass entlang der Längsachse (1) gleiche Bereiche des Querschnittsprofils (4) unterschiedliche Abstände von der Längsachse (1) aufweisen.

5. Antriebsrolle nach einem der Ansprüche 1 bis 4, **dadurch gekennzeichnet, dass** eine durch die Mantelfläche (3) gebildete Oberfläche eine erhöhte Rauhigkeit aufweist:

6. Antriebsrolle nach einem der Ansprüche 1 bis 5, **dadurch gekennzeichnet, dass** der Grundkörper (2) aus Metall besteht, und dass die Oberfläche des Grundkörpers (2) aufgeraut ist.

7. Antriebsrolle nach einem der Ansprüche 1 bis 6, **dadurch gekennzeichnet, dass** die Oberfläche sandgestrahlt ist.

8. Antriebsrolle nach einem der Ansprüche 1 bis 7, **dadurch gekennzeichnet, dass** die Oberfläche durch ein urformgebendes Verfahren hergestellt ist.

9. Hilfsantrieb für einen Anhänger, mit
- einem relativ zu einem Fahrgestell des Anhängers bewegbaren Träger;
- einem von dem Träger gehaltenen Antriebsmotor;
- einer an dem Träger gelagerten, von dem Antriebsmotor antreibbaren Antriebsrolle; und mit
- einem Bewegungsmechanismus zum Bewegen des Trägers zwischen einer Ruheposition, In der die Antriebsrolle von einem Rad des Anhängers getrennt ist, und einer Antriebsposition, in der die Antriebsrolle gegen das Rad des Anhängers gedrückt wird;
**dadurch gekennzeichnet, dass** die Antriebsrolle eine Antriebsrolle nach einem der Ansprüche 1 bis 8 ist.

## Claims

1. Drive roller for a vehicle-trailer auxiliary drive, with a base (2) which is essentially rotationally symmetrical relative to a longitudinal axis (1) which functions as an axis of rotation, where
- the base (2) has an outer face (3) deviating from that of an ideal cylinder;
- the outer face (3) has a cross-sectional profile (4) deviating from an ideal circle and standing perpendicular to the longitudinal axis (1); **characterised in that**
- the cross-sectional profile (4) follows the perimeter of the outer face (3) in the form of a sinus, where
- the cross-sectional profile (4) is unvarying over the length of the longitudinal axis (1).

2. Drive roller as described in Claim 1, **characterised in that** the cross-sectional profile (4) has sections which are at a different distance from the longitudinal axis (1).

3. Drive roller as described in Claim 1 or 2, **characterised in that** the cross-sectional profile (4) has been manufactured by an extrusion method.

4. Drive roller as described in one of Claims 1 to 3, **characterised in that** the cross-sectional profile (4) varies over the length of the longitudinal axis (1) in such a way that over the length of the longitudinal axis (1) equal sections of the cross-sectional profile (4) are at a different distance from the longitudinal axis (1).

5. Drive roller as described in one of Claims 1 to 4, **characterised in that** a surface formed by the outer face (3) has increased roughness.

6. Drive roller as described in one of Claims 1 to 5, **characterised in that** the base (2) consists of metal and that the surface of the base (2) is roughened.

7. Drive roller as described in one of Claims 1 to 6, **characterised in that** the surface has been sand-blasted.

8. Drive roller as described in one of Claims 1 to 7, **characterised in that** the surface has been made by a primary shaping method.

9. Auxiliary drive for a trailer, with
- a carrier which is movable relative to a trailer chassis;
- a drive motor held by the carrier;
- a drive roller supported by the carrier and drivable by the drive motor; and with
- a movement mechanism for moving the carrier between a rest position in which the drive roller is separated from a trailer wheel, and a driving position in which the drive roller is pressed against the trailer wheel;
**characterised in that** the drive roller is a drive roller as described in one of Claims 1 to 8.

## Revendications

1. Rouleau d'entraînement pour un entraînement auxiliaire d'une remorque de véhicule, avec un corps de base (2) qui présente globalement une symétrie de révolution par rapport à un axe longitudinal (1) servant d'axe de rotation, étant précisé
- que le corps de base (2) présente une surface latérale (3) qui est différente de la surface latérale d'un cylindre idéal,
- et que la surface latérale (3) présente un profil de section transversale (4) qui est différent d'un cercle idéal et qui est perpendiculaire à l'axe longitudinal (1),
**caractérisé**
- **en ce que** le profil de section transversale (4) a une forme sinusoïdale le long de la circonférence de la surface latérale (3),
- ledit profil de section de transversale (4) étant invariable le long de l'axe longitudinal (1).

2. Rouleau d'entraînement selon la revendication 1, **caractérisé en ce que** le profil de section transversale (4) comporte des zones qui présentent par rapport à l'axe longitudinal (1) des écartements différents.

3. Rouleau d'entraînement selon la revendication 1 ou 2, **caractérisé en ce que** le profil de section transversale (4) est réalisé par extrusion.

4. Rouleau d'entraînement selon l'une des revendications 1 à 3, **caractérisé en ce que** le profil de section transversale (4) est variable le long de l'axe longitudinal (1), de sorte que le long de cet axe longitudinal (1), des zones identiques du profil (4) présentent des écartements différents par rapport à l'axe longitudinal (1).

5. Rouleau d'entraînement selon l'une des revendications 1 à 4, **caractérisé en ce qu'**une surface formée par ladite surface latérale (3) présente une rugosité accrue.

6. Rouleau d'entraînement selon l'une des revendications 1 à 5, **caractérisé en ce que** le corps de base (2) est en métal et **en ce que** sa surface (2) est rugueuse.

7. Rouleau d'entraînement selon l'une des revendications 1 à 6, **caractérisé en ce que** la surface est traitée par sablage.

8. Rouleau d'entraînement selon l'une des revendications 1 à 7, **caractérisé en ce que** la surface est réalisée par façonnage initial.

9. Entraînement auxiliaire pour une remorque, avec
- un support qui est mobile par rapport à un châssis de la remorque ;
- un moteur d'entraînement qui est porté par le support ;
- un rouleau d'entraînement qui est monté sur le support et qui est apte à être entraîné par le moteur d'entraînement ; et
- un mécanisme de déplacement pour déplacer le support entre une position de repos dans laquelle le rouleau d'entraînement est séparé d'une roue de la remorque, et une position d'entraînement dans laquelle le rouleau d'entraînement est pressé contre la roue de la remorque ;
**caractérisé en ce que** le rouleau d'entraînement est un rouleau d'entraînement selon l'une des revendications 1 à 8.
